# EUROPÄISCHE PATENTSCHRIFT

(11) **EP 2 178 723 B1**
(45) Veröffentlichungstag und Bekanntmachung des Hinweises auf die Patenterteilung: **14.12.2011**
(21) Anmeldenummer: 08785353.7
(22) Anmeldetag: 05.08.2008
(51) Int. Cl.: B60R 21/205, B60R 21/215

(54) **FORMTEIL MIT INTEGRIERTER AIRBAGABDECKUNG UND AIRBAGDECKELBLECH**
MOLDED PART HAVING AN INTEGRATED AIRBAG COVER AND AIRBAG COVER PLATE
PIÈCE MOULÉE AVEC RECOUVREMENT INTÉGRÉ DE COUSSIN GONFLABLE ET TÔLE DE RECOUVREMENT DE COUSSIN GONFLABLE

(30) Priorität: 10.08.2007 DE 102007038055
(43) Veröffentlichungstag der Anmeldung: 28.04.2010
(73) Patentinhaber: Peguform GmbH, 79268 Bötzingen (DE)
(72) Erfinder: BASILE, Robert, 79268 Bötzingen (DE); FORSTHOFER, Konrad, 93352 Rohr/Laaberberg (DE); MULLOL, Nuria Ignés i, 79362 Forchheim (DE); SCHULER, Marco, 79106 Freiburg, (DE); VERSEGHY, Gustav, 93342 Mitterfecking (DE)
(74) Vertreter: Patentanwälte Westphal, Mussgnug & Partner
(86) Internationale Anmeldenummer: PCT/EP2008/006427
(87) Internationale Veröffentlichungsnummer: WO 2009/021654

(56) Entgegenhaltungen:
- EP-A- 1 754 635
- DE-A1-102005 043 401
- DE-C1- 4 437 773

## Beschreibung

Die vorliegende Erfindung betrifft ein Formteil mit einer integrierten Airbagabdeckung und einem in die Airbagabdeckung eingelagerten Airbagdeckelblech mit den Merkmalen des Oberbegriffs des Anspruchs 1 und ein Verfahren mit den Merkmalen des Oberbegriffs des Anspruchs 15. Ein solches Formteil und ein solches verfahren sind aus der EP 1 754 635 A bekannt.

Innenverkleidungen von Fahrzeugen, wie z.B. Instrumententafeln oder Seitenverkleidungen, hinter denen ein Airbag angeordnet ist, der durch eine unsichtbare Airbagabdeckung abgedeckt ist, weisen im Allgemeinen einen Splitterschutz auf. Dieser besteht generell aus Einlagen wie z.B. Geweben oder Metallblechen, im thermoplastischen Kunststoff, der in der Regel als Trägermaterial für Innenverkleidungen von Kraftfahrzeugen eingesetzt wird.

Wird ein Gewebe als Splitterschutz verwendet, muss hierbei üblicherweise das Gewebe in einem vorherigen Arbeitsgang mit Kunststoff umspritzt und dann anschließend z.B. mit dem Instrumententafelträger verbunden werden. Es ist auch möglich, das Gewebe durch Kleben an dem Träger zu fixieren. Auch hier ist in jedem Fall ein zusätzlicher Arbeitsschritt notwendig, um die Abdeckung mit einem Splitterschutz zu versehen.

Es ist allgemein bekannt, Airbagabdeckungen oder Airbagdeckel mir Metallblechen zu verstärken, die beim Öffnen des Airbagdeckels durch den sich explosionsartig entfaltenden Airbag den Airbagdeckel zusammenhalten und ein Zersplittern des Airbagdeckels verhindern. Generell muss der aus Metallblech hergestellte Splitterschutz ebenfalls in einem zusätzlichen Arbeitsprozess an einen entsprechenden Kunststoffträger für den Airbagdeckel genietet, gepresst bzw. über Nieten verschweißt werden.

So wird in der DE 44 37 773 C1 eine Instrumententafel mit einem integrierten, aufklappbaren Airbagdeckel beschrieben, wobei der Airbagdeckel eine mattenartige, Öffnungen aufweisende Verstärkung umfasst, die auf den Airbagdeckel aufgepresst ist. Dabei ist das Deckelmaterial in die Öffnungen der Verstärkung eingepresst, wodurch ein gleichmäßige innige Verbindung zwischen Deckel und Verstärkung entsteht. Beim explosionsartigen Entfalten des Airbags und dem dadurch initiierten Aufreißen des Airbagdeckels wird der Airbagdeckel durch die Verstärkung zusammengehalten, wobei die Verstärkung ein Splittern des Airbagdeckels verhindert und damit den Schutz der Insassen gewährleistet. Als Verstärkung werden beispielsweise Metallbleche eingesetzt, in die entsprechende Öffnungen eingestanzt sind.

Der entscheidende Nachteil bei all diesen Verfahren ist der zusätzliche Arbeitsschritt, der das jeweilige Verfahren selber und das Produkt (Werkstück), wie z.B. eine Instrumententafel, eine Türverkleidung oder eine Seitenverkleidung, erheblich verteuert.

Insbesondere bei der Verwendung von Metallblechen als Splitterschutz lässt sich dieser Nachteil nicht durch einfaches Einformen eines Splitterschutzes während des Formprozesses, beispielsweise im Spritzgusswerkzeug, beheben. Es wurde festgestellt, dass es beim Einlegen von einfach geformten Deckelblechen als Splitterschutz direkt beim bzw. vor dem Formprozess aufgrund der unterschiedlicher Wärmeausdehnungskoeffizienten von Kunststoff und Metall sowie dem beim Abkühlen der Kunststoffschmelze sich ergebenden Schrumpf zu Verformungen und Verwerfungen kommt, die sich beispielsweise auf einer Instrumententafeloberfläche abzeichnen.

Auch Instrumententafelträger mit integriertem Kunststoffschusskanal und eingelegtem Gewebe als Splitterschutz neigen aufgrund der unterschiedlichen Wanddickenverhältnisse (Träger und Schusskanal) beim Abkühlen ebenfalls zu Einfallstellen im Airbagbereich.

Diese Probleme umgeht man in der Regel weiterhin damit, dass der Splitterschutz in einem zusätzlichen Arbeitsschritt aufgebracht wird.

Es besteht somit jedoch weiterhin das Bestreben, die zum Einbringen eines Splitterschutzes notwendigen Prozessschritte zur reduzieren und nach Möglichkeit den Träger mit integrierter Airbagabdeckung und Verstärkung (Splitterschutz) in einem Arbeitsgang miteinander zu verbinden.

Gelöst wird diese Aufgabe durch ein Formteil mit den Merkmalen des Anspruchs 1. Vorteilhafte Ausgestaltungen der Erfindung sind in Unteransprüchen aufgezeigt.

Aufgabe der Erfindung ist es auch ein Verfahren zum Einbringen einer Verstärkung in eine Airbagabdeckung bereitzustellen. Gelöst wird diese Aufgabe durch ein Verfahren mit den Merkmalen des Anspruchs 17.

Die Grundidee der Erfindung besteht darin, dass der Splitterschutz bzw. die für den Splitterschutz notwendige Verstärkung konstruktiv so ausgelegt ist, dass die Verstärkung direkt in das Formwerkzeug eingelegt werden kann, ohne dass die sich ergebenden Spannungen beim Abkühlprozess nach dem Urformen zu Verwerfungen bzw. Welligkeit im Airbagbereich führen. Der Splitterschutz bzw. die Verstärkung ist gleichzeitig konstruktiv so ausgelegt, dass keine Verformungen bzw. Verwerfungen im Airbagbereich durch Wärmespannungen, die z.B. durch einen zyklischen Alterungsprozess hervorgerufen werden, auftreten.

Durch eine genau definierte Blechgeometrie ist man in der Lage, die auftretenden Spannungen durch die unterschiedlichen Wärmeausdehnungskoeffizienten bzw. den Schrumpf des Kunststoffes so aufzunehmen, dass die Oberfläche des Innenverkleidungsteils, wie z.B. eine Instrumententafel, im Airbagbereich genau die vorgegebene Geometrie beibehält und sich keine Verwerfungen ergebenen. Dies wird durch die gezielte Erhöhung der Blechsteifigkeiten in den unterschiedlichen Raumrichtungen erreicht.

Dazu ist das Airbagdeckelblech mit sogenannten Durchzügen versehen, die oberhalb der Grundfläche des Airbagdeckelblechs dachreiterartig angeordnet sind. Die Anordnung der Durchzüge ist gemäß einer bevorzugten Ausführungsform regelmäßig, was einen gleichmäßigen Abbau der auftretenden Spannungen gewährleistet. Die Durchzüge selber stehen in Form von Blechstreifen oberhalb der Grundfläche des Airbagdeckelbleches aus der Ebene des Airbagdeckelbleches heraus, das an dieser Stelle nach unten hin offen ist. Die Blechstreifen sind über Stege an ihren jeweiligen Enden mit der Grundfläche des Airbagdeckelblechs verbunden. Dabei entwickelt sich der Durchzug quasi auf einer Seite von der Grundfläche nach oben und endet dann wieder auf der anderen Seite in der Grundfläche. Die Anordnung der Durchzüge zur Grundfläche lässt sich dabei anschaulich mit Dachreitern auf einem Dach (= Grundfläche) vergleichen. Grundsätzlich ist es allerdings auch möglich, dass die Durchzüge unterhalb der Grundfläche oder beidseitig von der Grundfläche (ober- und unterhalb) angeordnet sind.

Bei einer bevorzugten Ausführungsform ist vorgesehen, dass die Blechstreifen (Durchzüge), über seitliche Stege zur Grundfläche hin abgestützt sind. Diese Stege dienen der zusätzlichen Stabilisierung der Durchzüge und damit zur Erhöhung der Biegesteifigkeit des gesamten Deckelbleches. Seitliche Stege sind insbesondere dann vorteilhaft, wenn die Gesamthöhe des Deckelbleches geringer ist als die Höhe des Hohlraums des Formwerkzeugs, so dass die Durchzüge beim Formgebungsprozess überspritzt werden. In diesem Fall verhindern die seitlichen Stege ein Verformen der Durchzüge während der Formgebung.

Eine vorteilhafte Ausgestaltung der Erfindung sieht vor, dass die Gesamthöhe des Deckelbleches der Höhe des herzustellenden Formteils entspricht, so dass Deckelblech nach dem Einlegen in das Formwerkzeug an den Oberflächen der Form anliegt und bei der Formteilherstellung keine Verformungen des Deckelbleches auftreten können.

Durch die Gestaltung der Durchzüge, die ein gezieltes Anheben oder Herabsetzen der Biegesteifigkeiten in den unterschiedlichen Raumrichtungen erlauben, ist das Airbagdeckelblech in der Lage, auftretende Schrumpf- oder Wärmespannungen aufzunehmen, ohne dass es zu Verwerfungen kommt. Dabei ist die Gestaltung des Airbagdeckelbleches abhängig von der Größe und Form der Airbagöffnung.

Die Erfindung sieht vor, dass die Durchzüge quer zur Längsrichtung des Airbagdeckelbleches angeordnet sind, wodurch die Biegesteifigkeit gegen diese Raumrichtung stark erhöht wird. Dabei erstrecken sich die Durchzüge nahezu über die gesamte Breite des Airbagdeckelbleches.

Üblicherweise sind Airbagdeckelbleche an ihrer Längsseite mit einem Scharnier versehen, das ein Aufklappen des Airbagdeckels ermöglicht und gleichzeitig verhindert, dass die Airbagabdeckung im Öffnungsfall frei in den Fahrzeuginnenraum geschleudert wird. In diesem Falle kann es vorteilhaft sein, die Durchzüge in Richtung des Scharniers teilweise zu verkürzen, was den Scharniervorgang entlang der Scharnierlinie erleichtert.

Weitere vorteilhafte Varianten sehen vor, dass die Durchzüge unterbrochen sind und nach einer bestimmten Länge wieder in die Grundfläche übergehen voraus sie dann später wieder hervorgehen können.

Eine bevorzugte Ausführungsform sieht vor, die Anordnung der Durchzüge seitlich des Deckelbleches jeweils mit einem Durchzug zu beginnen. Auf diese Weise kann die Gefahr eines seitliches Aufwölbens des Deckelbleches vermieden werden.

Durch eine geeignete Anordnung der Durchzüge, wobei Breite, Höhe und Anzahl der Durchzüge variiert werden kann, kann die Biegesteifigkeit des Airbagdeckelbleches gezielt eingestellt, erhöht bzw. herabgesetzt werden. Dabei kann die Geometrie der Durchzüge vorteilhaft so gewählt werden, dass die Kräfte des sich entfaltenden Airbags direkt in die Perforations- oder Schwächungslinien der Airbagabdeckung eingeleitet werden. Dadurch dass sich der Durchzug aus der Grundfläche erhebt und wieder in dieser einmündet, wird unter anderem auch ein sogenannter Bimetalleffekt vermieden, der zum Aufstellen des äußeren Rands des Deckelbleches durch den Kunststoffschrumpf führen könnte.

Gegenstand der vorliegenden Erfindung ist auch ein Verfahren zur Herstellung eines Formteils für eine Innenverkleidung, wobei ein erfindungsgemäßes Airbagdeckelblech vor dem Formgebungsprozess in das Formwerkzeug eingelegt wird und anschließend umformt wird, so dass die Einbringung des Splitterschutzes in die Airbagabdeckung in einem Arbeitsgang direkt mit der Formgebung der Airbagabdeckung selber bzw. des Formteils mit integrierter Airbagabdeckung erfolgt.

Als Formgebungsprozess wird vorteilhaft Spritzgießen mit thermoplastischen Kunststoffen gewählt, wobei als Kunststoffe Polypropylen, Polyethylen, Polybutylterephthalat, Polyoxymethylen, Polyamid, Polyethylenterephthalat, Polycarbonat, Acrylnitril-Butadien-Styrol oder Acrylnitril-Butadien-Styrol/Polycarbonat Copolymerisat eingesetzt werden können, die in einer bevorzugten Ausführungsform zusätzlich mit Fasern verstärkt sind.

Das Verfahren lässt sich vorteilhaft für Innenverkleidungen von Kraftfahrzeugen einsetzen, wobei insbesondere die Fertigung von Formteilen für Instrumententafeln hervorgehoben werden sollen.

Im folgenden wird die Erfindung anhand von Zeichnungen ausführlich erläutert.

Dabei zeigen
- Fig. 1: eine perspektivische Darstellung des Airbagdeckelbleches mit einer integrierten Schusskanalverstärkung und Airbagmodulanbindung,
- Fig. 2: eine perspektivische Darstellung des Airbagdeckelblechs seitlich,
- Fig. 3: eine perspektivische Darstellung des Airbagdeckelblechs in der Draufsicht,
- Fig. 4: einen Längsschnitt durch das Deckelblech und
- Fig. 5: einen Querschcnitt durch das Deckelblech.

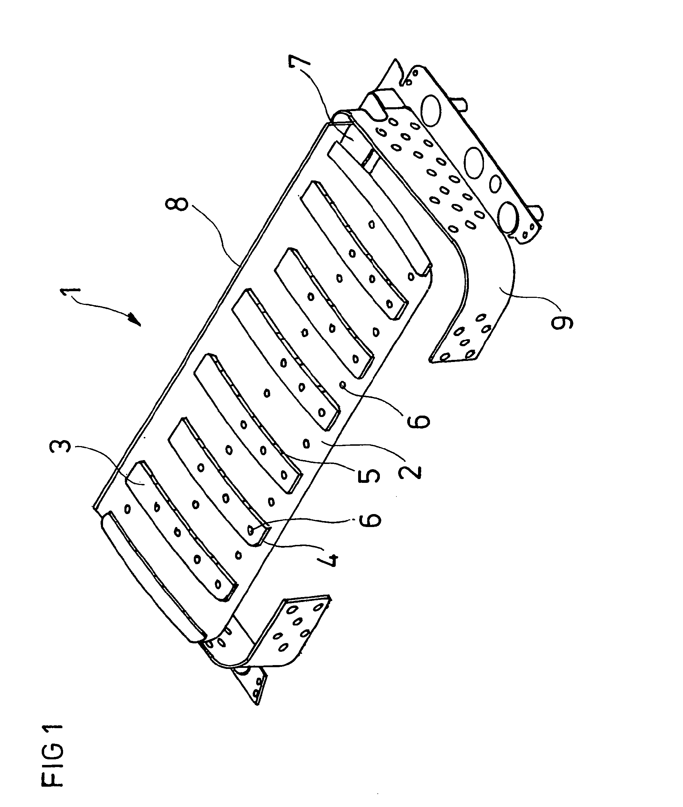

Die Figur 1 zeigt ein perspektivische Darstellung des Airbagdeckelblechs 1 mit einem Teil der Schusskanalverstärkung 9. Die Durchzüge 3 sind regelmäßig oberhalb der Grundfläche 2 des Airbagdeckelblechs dachreiterförmig angeordnet und erstrecken sich nahezu über die gesamte Breite des Airbagdeckelblechs. Die Anordnung der Durchzüge 3 ist regelmäßig, wobei die Durchzüge 3 über Stege 4 an ihren jeweiligen Enden mit der Grundfläche 2 verbunden sind. Eine weiter Stabilisierung der Durchzüge erfolgt durch seitliche Stege 5. Bei der in Figur 1 gewählten Ausführungsform ist jeder zweite Durchzug 3 in Richtung Scharnier 7 etwas verkürzt ausgeführt, um das Aufklappen entlang der Scharnierlinie 8 zu gewährleisten. Sowohl Grundfläche als auch Durchzüge sind gleichmäßig mit einer Vielzahl von Löchern versehen.

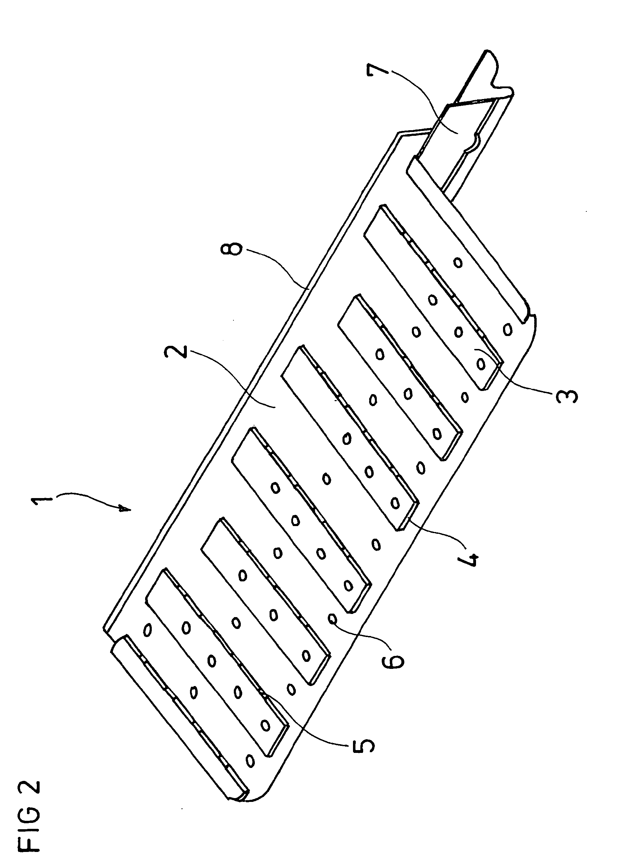

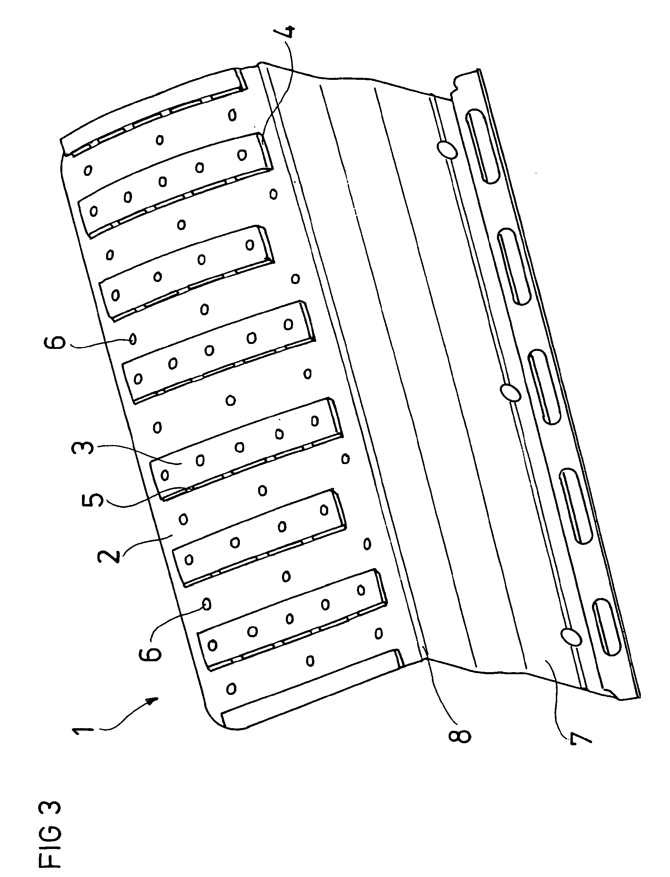

Die Figuren 2 und 3 zeigen das Airbagdeckelblech 1 als separates Bauteil.

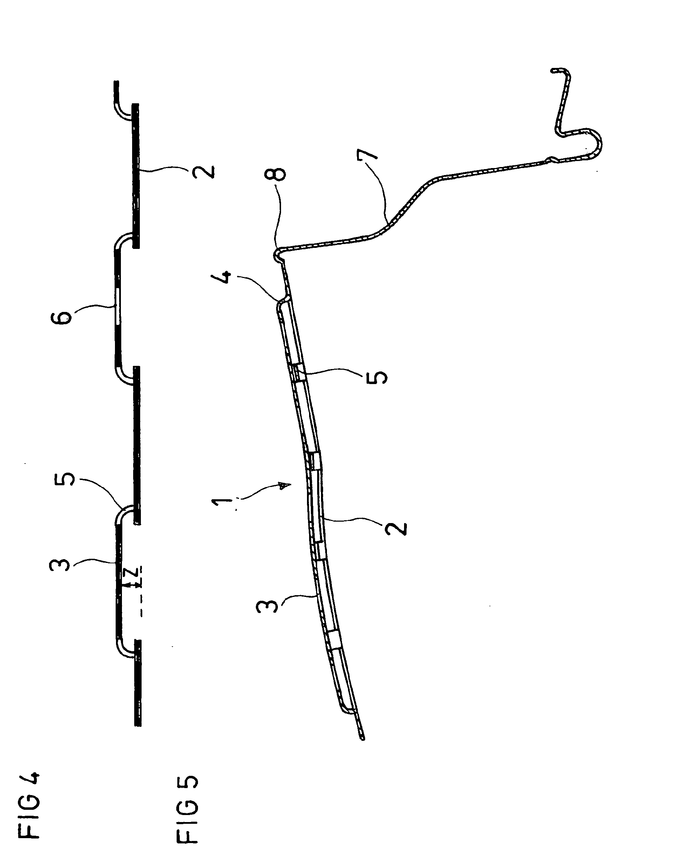

Figur 4 zeigt einen Teil eines Längsschnitts durch das Airbagdeckelblech. Dabei ist insbesondere die dachreiterartige Anordnung der Durchzüge 3 zu erkennen, wobei die Durchzüge 3 durch seitliche Stege 5 an der Grundfläche 2 des Deckelblechs stabilisiert sind.

Figur 5 zeigt einen Querschnitt durch ein Airbagdeckelblech. Bei dieser Darstellung sind die beiden Ebenen des Airbagdeckelblechs mit den Durchzügen 3 und der Grundfläche 2, die lediglich über Stege 4, 5 zusammengehalten werden besonders gut zu erkennen.

Auch wenn in der obigen Beschreibung die Erfindung im Wesentlichen anhand von Metallblechen beschrieben wird, ist es für den Fachmann naheliegend die Verstärkung auch in einer Kunststoffausführung vorzusehen, wobei dafür tiefgezogene Kunststoffbauteile oder verstärkte Kunststoffbauteile in Frage kommen.

### Bezugszeichenliste

- 1: Airbagdeckelblech
- 2: Grundfläche
- 3: Durchzug
- 4: Steg
- 5: Seitlicher Steg
- 6: Loch, Öffnung
- 7: Scharnier
- 8: Scharnierlinie
- 9: Schusskanalverstärkung

## Patentansprüche

1. Formteil mit integrierter Airbagabdeckung für eine Innenverkleidung eines Kraftfahrzeuges, wobei die Airbagabdeckung ein Airbagdeckelblech (1) als Verstärkung und Splitterschutz umfasst, wobei
das Airbagdeckelblech (1) direkt beim Formgebungsprozess für das Formteil in die Airbagabdeckung eingeformt ist,
**dadurch gekennzeichnet, dass** das Airbagdeckelblech Durchzüge (3) aufweist, die oberhalb und/oder unterhalb der Grundfläche (2) des Airbagdeckelblechs (1) angeordnet sind, wobei die Durchzüge (3) quer zur Längsrichtung des Airbagdeckelblechs angeordnet sind und sich dabei nahezu über die gesamte Breite des Airbagdeckelblechs (1) erstrecken.

2. Formteil nach Anspruch 1,
**dadurch gekennzeichnet, dass** das Airbagdeckelblech (1) ein Metallblech oder ein verstärkter oder tiefgezogener Kunststoff mit einer Geometrie zur Aufnahme der während des Formgebungsprozesses auftretenden Schrumpf- und Wärmespannungen ist.

3. Formteil nach einem der Ansprüche 1 bis 2,
**dadurch gekennzeichnet, dass** das die Durchzüge (3) regelmäßig angeordnet sind.

4. Formteil nach einem der Ansprüche 1 bis 3,
**dadurch gekennzeichnet, dass** die Durchzüge (3) als Blechstreifen oberhalb der Ebene der Grundfläche (2) des im Bereich der Durchzüge (3) nach unten hin offenen Airbagdeckelblechs (1) herausstehen, wobei die Blechstreifen an ihren Enden jeweils über einen Steg (4) mit der Grundfläche (2) des Airbagdeckelbleches (1) verbunden sind.

5. Formteil nach einem der Ansprüche 1 bis 4,
**dadurch gekennzeichnet, dass** die Durchzüge (3) durch seitliche Stege (5) zur Grundfläche (2) des Airbagdeckelblechs (1) hin abgestützt sind.

6. Formteil nach einem der Ansprüche 1 bis 5,
**dadurch gekennzeichnet, dass** das Deckelblechs (1) sowohl in der Grundfläche (2) als auch in den Durchzügen (3) mehrere Öffnungen (6) oder Löcher aufweist.

7. Formteil nach einem der Ansprüche 1 bis 6,
**dadurch gekennzeichnet, dass** die Durchzüge (3) so angeordnet sind, dass jeder zweite Durchzug (3) zum Scharnier (7) des Deckelblechs (1) hin venkürzt ist.

8. Formteil nach einem der Ansprüche 1 bis 7,
**dadurch gekennzeichnet, dass** die regelmäßige Anordnung der Durchzüge (3) auf dem Deckelblech (1) seitlich als erstes Element jeweils einen Durchzug (3) vorsieht.

9. Formteil nach einem der Ansprüche 1 bis 8,
**dadurch gekennzeichnet, dass** die Gesamthöhe Z des Airbagdeckelblechs (1) der Höhe des Formteils entspricht.

10. Formteil nach einem der Ansprüche 1 bis 9,
**dadurch gekennzeichnet, dass** die Gesamthöhe Z des Airbagdeckelblechs (1) geringer als die Höhe des Formteils ist.

11. Formteil nach einem der Ansprüche 1 bis 10,
**dadurch gekennzeichnet, dass** das Material für das Formteil ein thermoplastischer Kunststoff ist, wie z.B. Polypropylen (PP), Polyethylen (PE), Polybutylterephthalat (PBT), Polyoxymethylen (POM), Polyamid (PA), Polyethylenterephthalat (PET), Polycarbonat (PC), Acrylnitril-Butadien-Styrol (ABS) und Acrylnitril-Butadien-Styrol/Polycarbonat Copolymerisat (ABS-PC).

12. Formteil nach Anspruch 11,
**dadurch gekennzeichnet, dass** der thermoplastische Kunststoff faserverstärkt ist.

13. Formteil nach einem der Ansprüche 1 bis 12,
**dadurch gekennzeichnet, dass** der Formgebungsprozess ein Spritzgießverfahren ist.

14. Formteil nach einem der Ansprüche 1 bis 13
**dadurch gekennzeichnet, dass** die Innenverkleidung eine Instrumententafel ist.

15. Verfahren zur Herstellung eines Formteils nach einem der Ansprüche 1 bis 14, wobei ein Airbagdeckelblech (1) als Verstärkung und Splitterschutz für eine in das Formteil integrierte Airbagabdeckung vor dem Formgebungsprozess in das Formwerkzeug eingelegt wird und anschließend umformt wird,
**dadurch gekennzeichnet, dass** das Airbagdeckelblech (1) Durchzüge (3) aufweist, die oberhalb und/oder unterhalb der Grundfläche (2) des Airbagdeckelblechs (1) angeordnet sind, wobei die Durchzüge (3) quer zur Längsrichtung des Airbagdeckelblechs (1) angeordnet sind und sich dabei nahezu über die gesamte Breite des Airbagdeckelblechs (1) erstrecken.

## Claims

1. A moulded part with an integrated airbag cover for an inner lining of a motor vehicle, wherein the airbag cover comprises an airbag cover plate (1) as a reinforcement and a splinter protection, wherein the airbag cover plate (1) is directly shaped into the airbag cover during the shaping process for the moulded part, **characterized in that** the airbag cover plate has passages (3) which are arranged above and/ or below the base area (2) of the airbag cover plate (1), wherein the passages (3) are arranged transversely to the longitudinal direction of the airbag cover plate and in this case extend virtually over the entire width of the airbag cover plate (1).

2. A moulded part according to claim 1, **characterized in that** the airbag cover plate (1) is a metal plate or a reinforced or deep-drawn plastics material with a geometry for absorbing the shrinkage stresses and heat stresses which occur during the shaping process.

3. A moulded part according to one of claims 1 to 2, **characterized in that** the passages (3) are arranged regularly.

4. A moulded part according to any one of claims 1 to 3, **characterized in that** the passages (3) project as strips of metal plate above the plane of the base area (2) of the airbag cover plate (1) which is open downwards in the region of the passages (3), wherein the strips of metal plate are connected at their ends to the base area (2) of the airbag cover plate (1) by way of a web (4) in each case.

5. A moulded part according to any one of claims 1 to 4, **characterized in that** the passages (3) are supported by lateral webs (5) with respect to the base area (2) of the airbag cover plate (1).

6. A moulded part according to any one of claims 1 to 5, **characterized in that** the cover plate (1) has a plurality of openings (6) or perforations both in the base area (2) and in the passages (3).

7. A moulded part according to any one of claims 1 to 6, **characterized in that** the passages (3) are arranged in such a way that every second passage (3) is shortened towards the hinge (7) of the cover plate (1).

8. A moulded part according to any one of claims 1 to 7, **characterized in that** the regular arrangement of the passages (3) on the cover plate (1) provides for one passage (3) as a first element in each case at the side.

9. A moulded part according to any one of claims 1 to 8, **characterized in that** the overall height Z of the airbag cover plate (1) corresponds to the height of the moulded part.

10. A moulded part according to any one of claims 1 to 9, **characterized in that** the overall height Z of the airbag cover plate (1) is less than the height of the moulded part.

11. A moulded part according to any one of claims 1 to 10, **characterized in that** the material for the moulded part is a thermoplastic plastics material, such as for example polypropylene (PP), polyethylene (PE), polybutyl terephthalate (PBT), polyoxymethylene (POM), polyamide (PA), polyethylene terephthalate (PET), polycarbonate (PC), acrylonitrile butadiene styrene (ABS) and acrylonitrile butadiene styrene / polycarbonate copolymerizate (ABS-PC).

12. A moulded part according to claim 11, **characterized in that** the thermoplastic plastics material is fibrereinforced.

13. A moulded part according to any one of claims 1 to 12,
**characterized in that** the shaping process is an injection moulding method.

14. A moulded part according to any one of claims 1 to 13,
**characterized in that** the inner lining is a dashboard.

15. A method of producing a moulded part according to any one of claims 1 to 14, wherein an airbag cover plate
(1) is inserted into the moulding tool before the shaping process as a reinforcement and a splinter protection for an airbag cover integrated in the moulded part and is then shaped, **characterized in that** the airbag cover plate (1) has passages (3) which are arranged above and/or below the base area
(2) of the airbag cover plate (1), wherein the passages (3) are arranged transversely to the longitudinal direction of the airbag cover plate (2) and in this case extend virtually over the entire width of the airbag cover plate (1).

## Revendications

1. Pièce moulée avec recouvrement intégré de coussin gonflable pour la garniture interne d'un véhicule automobile, ce recouvrement de coussin gonflable comportant une tôle de recouvrement de coussin gonflable (1) faisant office d'élément de renforcement et de protection contre les éclats d'objets, cette tôle de recouvrement de coussin gonflable (1) étant directement formée lors du procédé de mise en forme de la pièce moulée, dans le recouvrement de coussin gonflable,
**caractérisée en ce que**
la tôle de recouvrement de coussin gonflable comporte des traverses (3) qui sont situées au-dessus et/ou en dessous de la base (2) de la tôle de recouvrement de coussin gonflable (1), ces traverses (3) étant disposées transversalement à la direction longitudinale de la tôle de recouvrement de coussin gonflable, et s'étendant approximativement sur la totalité de la largeur de cette tôle de recouvrement de coussin gonflable (1).

2. Pièce moulée conforme à la revendication 1,
**caractérisée en ce que**
la tôle de recouvrement de coussin gonflable (1) est une tôle métallique ou un élément en matière plastique renforcé ou emboutie ayant une géométrie adaptée à la réception des contraintes de retrait ou des contraintes thermiques se présentant pendant le procédé de mise en forme.

3. Pièce moulée conforme à l'une des revendications 1 à 2,
**caractérisée en ce que**
les traverses (3) sont disposées régulièrement.

4. Pièce moulée conforme à l'une des revendications 1 à 3,
**caractérisée en ce que**
les traverses (3) sont constituées par des bandes de tôle faisant saillie au-dessus du plan de la base (2) de la tôle de recouvrement de coussin gonflable (1) qui est ouverte vers le bas dans la zone de ces traverses (3), ces bandes de tôle étant respectivement reliées à leurs extrémités, par une entretoise (4) avec la base (2) de la tôle de recouvrement de coussin gonflable (1).

5. Pièce moulée conforme à l'une des revendications 1 à 4,
**caractérisée en ce que**
les traverses (3) s'appuient contre la base (2) de la tôle de recouvrement de coussin gonflable (1) par des entretoises latérales (5).

6. Pièce moulée conforme à l'une des revendications 1 à 5,
**caractérisée en ce que**
la tôle de recouvrement (1) comporte plusieurs ouvertures (6) ou trous percés dans la base (2) et également dans les traverses (3).

7. Pièce moulée conforme à l'une des revendications 1 à 6,
**caractérisée en ce que**
les traverses (3) sont disposées de sorte qu'une traverse (3) sur deux soit raccourcie au niveau de la charnière (7) de la tôle de recouvrement (1).

8. Pièce moulée conforme à l'une des revendications 1 à 7,
**caractérisée en ce que**
la disposition régulière des traverses (3) sur la tôle de recouvrement (1) comporte latéralement une traverse latérale (3) respective correspondant au premier élément.

9. Pièce moulée conforme à l'une des revendications 1 à 8,
**caractérisée en ce que**
la hauteur totale Z de la tôle de recouvrement de coussin gonflable (1) correspond à la hauteur de la pièce moulée.

10. Pièce moulée conforme à l'une des revendications 1 à 9,
**caractérisée en ce que**
la hauteur totale Z de la tôle de recouvrement de coussin gonflable (1) est inférieure à la hauteur de la pièce moulée.

11. Pièce moulée conforme à l'une des revendications 1 à 10,
**caractérisée en ce que**
le matériau constitutif de la pièce moulée est un matériau synthétique thermoplastique tel que par exemple le polypropylène (PP), le polyéthylène (PE), le polybutylènetéréphthalate (PBT), le polyoxyméthylène (POM), le polyamide (PA), le polyéthylènetéréphtalate (PET), le polycarbonate (PC), le polymère acrylonitrile-butadiène-styrène (ABS), et le copolymère acrylonitrile-butadiène-styrène/polycarbonate (ABS-PC).

12. Pièce moulée conforme à la revendication 11,
**caractérisée en ce que**
le matériau synthétique thermoplastique est renforcé par des fibres.

13. Pièce moulée conforme à l'une des revendications 1 à 12,
**caractérisée en ce que**
le procédé de mise en forme est un procédé d'injection.

14. Pièce moulée conforme à l'une des revendications 1 à 13, **caractérisée en ce que**
la garniture ou l'habillage interne est un tableau de bord.

15. Procédé d'obtention d'une pièce moulée conforme à l'une des revendications 1 à 14, selon lequel, avant le procédé de mise en forme, on insère dans l'outil de moulage, une tôle de recouvrement de coussin gonflable (1) faisant office d'élément de renforcement et de protection contre les éclats d'objets pour un recouvrement de coussin gonflable intégré dans la pièce moulée, puis on effectue la mise en forme,
**caractérisé en ce que**
la tôle de recouvrement de coussin gonflable (1) comporte des traverses (3) qui sont situées au-dessus et/ou en dessous de la base (2) de la tôle de recouvrement de coussin gonflable (1), ces traverses (3) étant disposées transversalement à la direction longitudinale de la tôle de recouvrement de coussin gonflable (1) et s'étendant approximativement sur la totalité de la largeur de cette tôle de recouvrement de coussin gonflable (1).
